(19) Europäisches Patentamt
European Patent Office
Office européen des brevets

(11) **EP 0 880 091 B1**

(12) **EUROPEAN PATENT SPECIFICATION**

(45) Date of publication and mention
of the grant of the patent:
**01.12.2004 Bulletin 2004/49**

(51) Int Cl.⁷: **G06F 3/033**, H04B 1/38,
H04M 1/274, H04M 1/00

(21) Application number: **98660047.6**

(22) Date of filing: **19.05.1998**

(54) **A method and an arrangement for scrolling information presented on a display of a mobile station**

Verfahren und Vorrichtung zur Informationsverschiebung einer Anzeige in einer Mobilfunkstation

Procédé et dispositif pour faire défiler des informations présentées à l'affichage d'une station mobile

(84) Designated Contracting States:
**DE FR GB SE**

(30) Priority: **21.05.1997 FI 972159**

(43) Date of publication of application:
**25.11.1998 Bulletin 1998/48**

(73) Proprietor: **Nokia Corporation**
**02150 Espoo (FI)**

(72) Inventor: **Korhonen, Panu**
**00180 Helsinki (FI)**

(74) Representative: **Levlin, Jan Markus**
**Berggren Oy Ab,**
**P.O. Box 16**
**00101 Helsinki (FI)**

(56) References cited:
EP-A- 0 721 272        WO-A-95/14964
WO-A-95/25397        US-A- 4 954 967
US-A- 5 495 566

- **ANONYMOUS: "Window Scrolling without Scroll Bars" IBM TECHNICAL DISCLOSURE BULLETIN, vol. 36, no. 10, October 1993 (1993-10), pages 137-138, XP000412209 New York, US**
- **ANONYMOUS: "Three-Dimensional Selection Widget" IBM TECHNICAL DISCLOSURE BULLETIN, vol. 38, no. 2, February 1995 (1995-02), pages 423-424, XP000502528 New York, US**

**Description**

The object of the invention is a method defined in the ingress of claim 1 and an arrangement defined in the ingress of claim 12 in order to scroll data presented on a display of a mobile station.

Information such as facts, names and/or numbers concerning persons or things, are often stored in the form of a list in the memory of a mobile station. Data relating to the same fact form an element of the list.

For selecting an element in a list there are known methods, which for selection presents one or more alternative elements at a time on the display of the mobile station. The scrolling of the list is controlled by a separate control means. However, this way of action has a problem in that in small-sized devices generally only the options presented on the display are visible because the displays are rather small and in the present way they do not have space for several list elements at the same time. The scrolling of the lists requires control means, such as keys or a rotatable knob, which require space on the device surface. A mouse pointer can not be used in small-sized devices, such as in present-day mobile stations, because no interface is available for a mouse. Also in other respects a mouse pointer is not really suitable in connection with a small-sized portable device.

A disadvantage with prior art methods is that from a long list it is difficult to get into view the list elements, such as names and/or numbers. With the current display procedures only one or a few of the list elements at a time are visible in the device's display, and there is not sufficiently space to display an element in its whole width on the display. A further disadvantage is that a control means is required on the device surface in order to handle the list.

Known prior art in the field of scrolling information on a display include US 4 954 967 A, which describes a method and an arrangement for determining the direction and distance of one scrolling event from the length and speed of a pointer movement across a touch-sensitive screen. An IBM Technical Disclosure Bulletin vol 38, no. 02, February 1995, page 423 illustrates a graphical object to be presented on a display as an aid for facilitating easy scrolling. The publication US 5 495 566 A illustrates how a display begins to scroll once the cursor wanders off an active display area beyond a screen boundary, how the scrolling speed is made dependent on the times that scrolling has been initiated, and how cursor-driven scrolling is combined with navigation key depressions. The publication WO 95 14964 illustrates an electronic imitator of a rotating cardfile.

Touch screens are also already known in personal computers, in personal digital assistants (PDA) and in oscilloscopes. Touch screens are used for information input by touching an icon shown on the display with a finger, a special pen or with some other pointing means.

The object of the invention is to solve the above presented problems of prior art, particularly to facilitate the scrolling of a long list. In order to present the list on the display there is at the same time presented a method which is faster, easier and clearer than the prior methods.

The characteristic features of the method according to the invention are presented in the characteristic clause of claim 1. The characteristic features of the device according to the invention are presented in the characteristic clause of claim 12. Preferred embodiments of the invention are presented in the dependent claims.

The object of the invention is a method to scroll data presented on the display of a mobile station. According to the invention the control area of the display is touched with a pointing means, the pointing means is moved in contact with the control area of the display, and the displayed part of the presented information is scrolled in the display in the direction of the movement of the pointing means. The control area of the display can be a touch sensitive area arranged on the surface of the display, or a separate surface in another location of the mobile station for controlling the display.

According to the invention the displayed part of the information presented on the display of said mobile station is left scrolling in the vertical direction, even if the pointing means is removed from the control area of the display. Said scrolling is stopped by touching the display control area with a pointing means. Said removal is effected by moving the pointing means along the control area of the display and out from it, or by lifting the pointing means from the control area of the display. The vertical scrolling direction here means the column direction, or in other words the direction which is transversal to the lines.

According to a preferred embodiment of the invention said displayed part, which is left scrolling, is arranged to scroll at a rate measured for, or proportional to, the speed of the pointing means at the last moment before it was removed. The speed of the pointing means in the direction of the control area of the display, when the pointing means is removed, determines the initial scrolling speed of the displayed part and the scroll direction.

According to a preferred embodiment of the invention said displayed part is left scrolling if said speed exceeds a predetermined limit. When the speed is lower than this limit the displayed part is immediately stopped.

According to a preferred embodiment of the invention said displayed part left scrolling is arranged to scroll and retard by itself. Said retardation is effected by applying a suitable, for instance an exponential formula.

According to an embodiment of the invention said scrolling is stopped if the scrolling speed falls below a predetermined limit. This limit is in practice selected substantially lower than the limit for leaving the displayed part to scroll. Thus the scrolling is left on only at a clearly perceivable speed, but is completely stopped only when in practice it appears to have stopped. Thus a movement, which was thought of as stopped, will not cause the displayed part to drift.

According to an embodiment of the invention the presented information's scrolling rate on the display is indicated by generating a sound proportional to the scrolling rate. The proportionality to the scrolling rate is indicated by the frequency and/or the loudness of the sound. Interruptions of the sound can also be used to represent the scrolling, for instance by changing the interruption frequency.

According to an embodiment of the invention said presented information is shown in the display on the outer surface of an imaginary cylinder. The presented information comprises data elements, such as text and symbols. The axis of the imaginary cylinder is preferably in the plane of the display or horizontally below it. A part of the elements of the information, such as a list, are visible in the display. The cylinder can be rotated with a pointing means, such as with a finger, by touching the displayed part of the list element and by moving this element with the pointing means in the desired direction, whereby elements which in the motion direction are in front of the element to be moved will be moved outside the display, and new elements will be visible behind this element. When required, the imaginary cylinder is also moved sideways.

An object of the invention is also an arrangement to scroll the presented information, whereby the arrangement comprises a display to present the information and a means to scroll said presented information. According to the invention the arrangement comprises a display control area for detecting the touch of a pointing means, and means to scroll the displayed part of the presented information in the movement direction of the pointing means.

In an embodiment of the invention said control area comprises an active surface on the display for detecting a touch of the pointing means. The active surface is most preferably a surface covering almost the whole display, but alternatively it has a strip form. There can be a plurality of said strips.

In an embodiment of the invention said control area includes a separate touch surface for detecting a touch of the pointing means.

In one embodiment of the invention the arrangement further includes means to generate a sound which is proportional to the scrolling speed of the presented information.

In an embodiment of the invention the arrangement also includes means to display said presented information in the form of a cylinder rotating in the display, whereby the information elements, such as text and symbols, are displayed on the outer surface of the cylinder. The size of the elements and their spacing can be displayed in different sizes in different places on the cylinder, and the edge formed by the elements can be presented as an arcuate edge in order to give a three-dimensional impression. Thus an element scrolled downwards from the top is first drawn as a small element, shifted slightly aside in the transversal direction, which then grows and moves horizontally to the center when it scrolls into the middle of the display.

A touch screen can be realized with any display unit known per se. The display can be touched by a pointing means, such as a finger, a common pencil, or a corresponding passive means. In these display units a pointing means on the display is located for instance by capacitive, resistive, infrared or acoustic detection. A touch screen is usually realized with a cathode ray tube, but in the method according to the invention most preferably with a liquid crystal display (LCD) or a corresponding flat display.

Advantages of the invention are particularly the speed and the ease with which the list is managed, as well as the clarity of presentation. With the method according to the invention preferably several list elements are shown in consecutive order. New elements are scrolled into view, and the previous elements are scrolled out from the display. The method according to the invention also has the advantage that no separate scrolling keys are required. This is an important advantage, as for instance on the surface of mobile stations there is limited space for keys.

The invention is described below with the aid of the enclosed drawings, in which:

figure 1 shows the list form according to the invention on the outer surface of an imaginary cylinder;

figure 2 shows a mobile station, in which the arrangement according to the invention is realized;

figure 3 shows an embodiment of the method according to the invention as a flow chart;

figure 4 shows some parts of a mobile station, which are essential regarding the invention; and

figure 5 shows a mobile station, in which the arrangement according to an embodiment of the invention is realized.

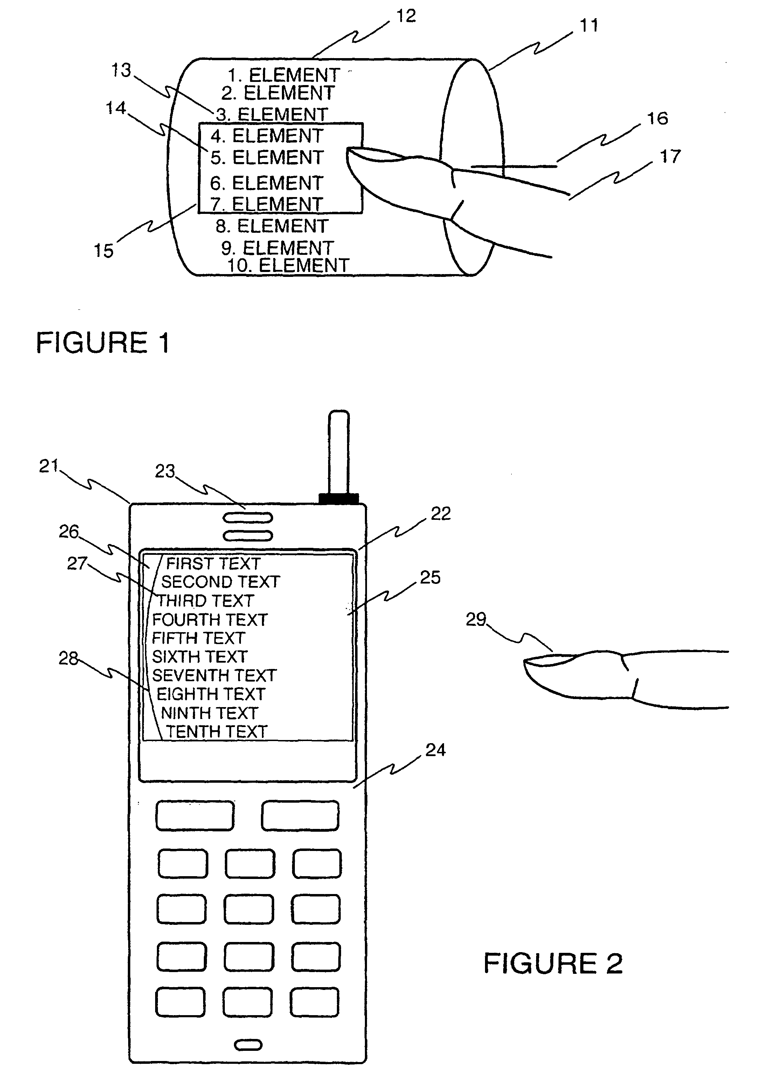

Figure 1 shows a preferred list form according to the invention. The list 12 with its elements 13, 14 is arranged on the outer surface of an imaginary cylinder 11. Only a part of the list 12, or one or more elements 14 are visible at a time on the display 15 of the device. In figure 1 the display 15 is illustrated by a rectangle drawn in broken lines. If the desired list element 13 is not visible, then the list 12 and the cylinder are rotated around their axis 16. The list 12 is handled by a pointing means 17.

The elements 13, 14 of the list 12 shown on the outer surface of the imaginary cylinder can contain i.a. text, numbers, and patterns. At the end of a list 12 and the next beginning there is preferably arranged an empty space, particularly when the list 12 is short, so that the repeated beginning of the list is clearly perceived, and so that a short list 12 will not be repeated on the display. The size of the elements 13, 14 of the list 12 and the line spacing can be changed, e.g. according to their location.

All elements to be displayed in the display 15 do not have space to display their whole length in the display 15, so the cylinder can be also moved sideways.

Figure 2 shows schematically a mobile station 21, in which the invention is applied. The mobile station 21 comprises i.a. a display 22, a speaker 23 and a keyboard 24 in order to use the normal functions and to input data. A list 26 is shown on the display 22. Broken lines on the display 22 outline the so called active area 25, which in practice is perceived by the markings and/or patterns shown in the display 22. A list 26 in text form belongs to these markings and/or figures, and at the same time to the active area 25. The active area 25 is a touch sensitive area in order to control the contents, in this case the list, of the display 22. The end line formed by the elements 27 of the list 26 can be presented as an arc 28, representing a three-dimensional effect. The active area 25 of the display can be touched with a pointing means, here a finger 29, in order to scroll the list 26.

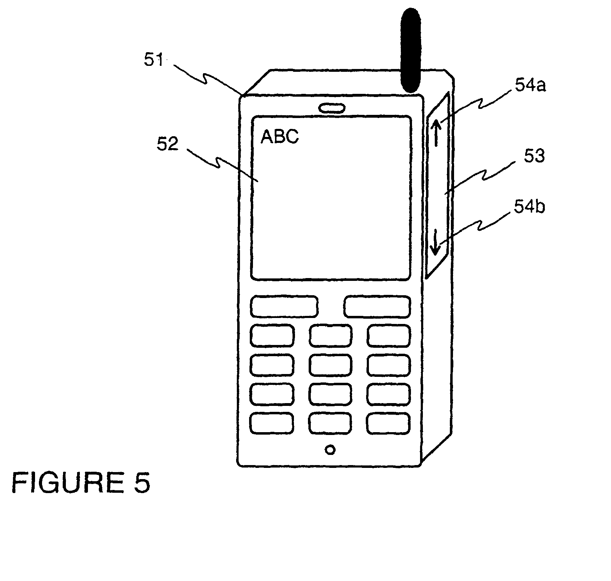

In figure 2 the display control area is the above mentioned active area 25 of the display, but alternatively it is a separate touch surface outside the display for controlling the display, as shown in figure 5.

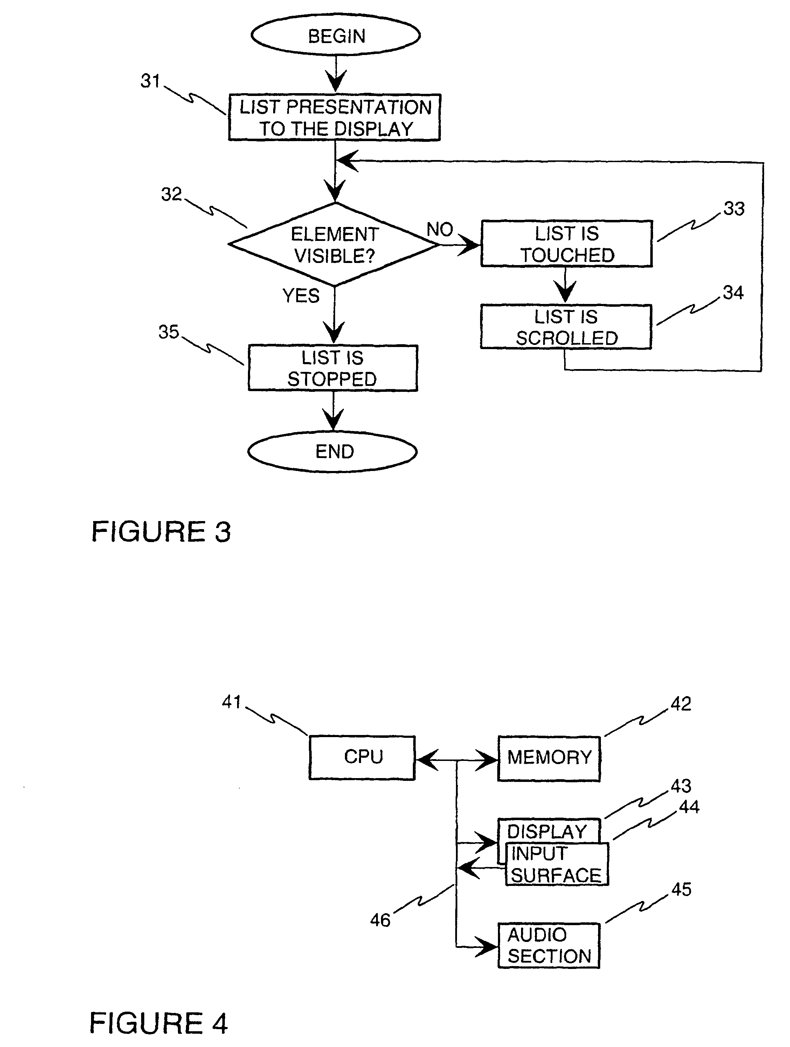

Figure 3 shows an embodiment of the method according to the invention in the form of a flow chart. The method is applied in a device, which is a mobile station. In step 31 a list 12 is selected for display 15 (cf. figure 1) in a suitable way, for instance with a key. The list 12 is formed by elements 13, 14 arranged consecutively below each other. A look shows whether the desired element 13 can be seen on the touch sensitive display 15 (step 32). If the element 13 is not visible, then the list 12 in the active area of the display is touched with a pointing means 17, such as with a finger, a pencil or another instrument of that kind (step 33), and the list 12 is scrolled into the desired direction by moving the pointing means 17 on the surface of the display in this direction (step 34). If the pointing means 17 is moved outside the display the list 12 is left scrolling.

The movement of a list 12 left scrolling is preferably exponentially retarded. If the list 12 stops before the desired element 13 is visible, the scrolling action (step 34) can be repeated until the desired element 13, such as a name and telephone number is visible on the display 15. When required, the list 12 is stopped (step 35) by touching an element 13 or 14 of the list 12.

Below is described as an example a way to find an element 13, 14, 27 on a long list 26, when the desired element 13 initially is outside the area 15 visible on the display 22. When the list presentation mode is activated 31 but the desired element 13 is not visible, then the cylinder 11 is rotated by moving the pointing means 17, 28 up or down on the element 14, 27 along the display surface 22. The element 14, 27 moves together with the pointing means 17, 28, so that the pointing means will not move outside the element. When the pointing means 17, 28 is moved off the active area 25 of the display, the list 12, 26 is left in the moving state, or the elements in the display 15, 22 will continue scrolling. The rotation of the cylinder 12 is preferably exponentially retarding. The active area 25 of the display contains a touch sensitive list 26. The rotation is visible as a motion of the elements 27 of the list 22 and heard as a sound proportional to the speed. When the desired element 13 comes into view the list 12, 26 is stopped by touching the active area 25 of the list, preferably at the location of said element 13, and when required the display is scrolled sideways until the desired part of the element is visible on the display 15.

Figure 4 shows some parts of the mobile station which are essential for the invention. In order to scroll the displayed information the arrangement includes a memory 42 for storing the displayed information, a display 43 for presenting the information, and means 41, 46 for scrolling said displayed information. The device of figure 2 comprises means for scrolling the list 26 by moving the pointing means 28 in the scrolling direction on the active area 25 of the display. These means for scrolling the list 26 comprise a central processing unit 41, a display control area or a reading surface 44 for detecting a touch of the pointing means 28, a pointing means 28, and a program in the memory 42 which reads the display control area 25 in order to detect a touch and the touch point of the pointing means 28, and in order to scroll the displayed information 26 on the display 22, so that the displayed information is scrolled in the movement direction of the pointing means 28 controlled by the movement of the pointing means 28.

The processor based device preferably comprises means 23, 45 to generate a sound which is proportional to the scrolling speed of said displayed information 26. These means include a speaker 23, an audio section 45, and a control program stored in the memory 42. The sound proportional to the scrolling speed of the list 26 is for instance generated by the frequency, loudness or interruptions of the sound. The data communication between the parts 41 - 45 is realized through the microprocessor bus 46.

The arrangement also includes means for displaying the elements 27, such as text and symbols, of the presented information, here the list 26, in the display 43 on the outer surface of an imaginary cylinder. These means for presenting the list 26 on the display 22 include a central processing unit 41 and a program in the memory 42 which creates a picture of a cylindrical list 26 on the display 43. The user can handle the list 26 by suitably touching the display control area 25 with a pointing means 28 in the above presented manner, and by acting on the elements 27 of the list.

Figure 5 shows a mobile station 51, in which an arrangement according to an embodiment of the invention is realized. On one side of the mobile station 51 is shown a touch surface 53 known per se, which is used as an alternative way to control the scrolling operation in the display 52 of the mobile station 51 by moving a pointing means on said control surface 53. Preferably the touch surface 53 operates in the same way as the active area of the display described above. The touch surface 53 operates alternatively in numerous other ways, for which there are direction arrows 54a, 54b at the ends of the touch surface 53. The direction arrows 54a, 54b represent the scrolling direction caused by a touch. Alternative ways of operation are i.a. scrolling one element at a time by touching the touch surface 53 once at a direction arrow 54a, 54b; an accelerating scrolling by touching the touch surface 53 a longer time at a direction arrow 54a, 54b; a controlled scrolling rate by touching the touch surface 53 continuously in an area between the direction arrows 54a, 54b, whereby the place of the touch determines the scrolling speed. The scrolling rate obtains its maximum value according to the place of the touch when the touch surface 53 is touched a long time. The touch can begin at any place of the touch surface 53 when a controlled scrolling rate is desired. The scrolling is stopped when the center of the touch surface 53 is touched.

The touch surface 53 of the mobile station 51 is alternatively used, preferably on the basis of a selected parameter, as was described above in connection with figure 3 regarding the use of the active area of the display. Then the list elements are moved directly proportionally to the movement of the touch spot on the touch surface 53.

The control area 25 of the mobile station 21 is alternatively used, preferably on the basis of a selected parameter, as was presented above regarding the use of the touch surface 53 in the description of figure 5. Then the touch spot on the active area of the display 25 causes a scrolling rate which is proportional to the position of the touch spot.

The list scrolling in the display is retarded e.g. according to the equation

$$v = v_0 - \frac{t^2}{K} \qquad (1)$$

where $v$ is the scrolling speed, $v_0$ is the scrolling speed at the beginning, $t$ is the time, and $K$ is a constant. The counting of the time $t$ starts at the moment when the scrolling is left on without user control.

Above we presented a movement only in the direction of the rotation of an imaginary cylinder, but in order to have a view of the end of a long line it is also possible to arrange a transversal movement. This transversal movement is preferably only a transition movement, without any scrolling separately left on. The transversal movement is controlled by the active area on the display, or alternatively by a separate horizontal touch surface. It is also possible to limit the movement so that a movement is possible only in a single direction at a time. Then an oblique movement of the pointing means causes a vertical or a horizontal scrolling, which is selected for instance so that a vertical or horizontal movement is selected when the oblique movement is in an angle less than 45 degrees from the vertical or horizontal, respectively.

The invention is not limited to apply only to the above presented embodiment examples, but many variations are possible within the inventive idea defined by the claims.

**Claims**

1. A method for scrolling information (12, 13, 14) presented on a display of a mobile station, comprising method steps in which a control area of the display is touched with a pointing means (17), said pointing means (17) is moved in contact with said control area of the display, and a displayed part of the presented information (12, 13, 14) is scrolled (34) in the display (15), in a direction of a movement of said pointing means (17), wherein :

   - said displayed part of the information (12, 13, 14) presented on the display of the mobile station is left scrolling when the pointing means (17) is removed from said control area of said display, **characterized in that**:

      - said displayed part of the presented information (12, 13, 14) is stopped from scrolling by touching said display control area with said pointing means (17).

2. A method according to claim 1, **characterized in that** said displayed part, which is left scrolling, is arranged to scroll at a rate measured for a vertical speed of said pointing means (17) at the last moment before it was removed.

3. A method according to claim 2, **characterized in that** said displayed part is left scrolling if said speed exceeds a predetermined limit.

4. A method according to claim 1, 2 or 3, **characterized in that** said displayed part left scrolling is arranged to scroll at a rate retarding by itself.

5. A method according to claim 2, 3 or 4, **characterized in that** said scrolling is stopped if said scrolling rate falls below a predetermined limit.

**6.** A method according to any previous claim 1 to 5, **characterized in that** a scrolling rate of said displayed part of the presented information (12, 13, 14) on the display (15) is indicated by generating a sound proportional to said scrolling rate.

**7.** A method according to any previous claim 1 to 6, **characterized in that** the presented information (12, 13, 14) is arranged on an outer surface of an imaginary cylinder (11) rotating in the display (15).

**8.** A method according to any previous claim 1 to 7, **characterized in that** said scrolling of said displayed part of the presented information (12, 13, 14), or a rotation of said imaginary cylinder (11) is arranged to be substantially continuous.

**9.** A method according to claim 7, **characterised in that** the cylinder (11) can be also moved sideways.

**10.** A method according to any previous claim 1 to 8, **characterized in that** said scrolling of said displayed part is limited to be effected only in a vertical direction.

**11.** A method according to any previous claim 1 to 10, **characterized in that** the presented information (12, 13, 14) is arranged as a list (12), the elements (13, 14) of which, such as text and symbols, are presented in the display (15).

**12.** An arrangement to scroll the information (26) presented on a display (22) of a mobile station (21), the arrangement comprising a display (22, 43) to display information (26), a display control area for detecting a touch of a pointing means (28), and means (41, 42, 46) for scrolling a displayed part of the presented information (26), wherein:

- said means for scrolling are adapted to leave said displayed part of the presented information (26) on the display (22) scrolling when said pointing means (28) are removed from said control area of the display, **characterized in that**:

  - said means for scrolling are adapted to stop said displayed part of the presented information (12, 13, 14) from scrolling when said display control area is touched with said pointing means (17).

**13.** An arrangement according to claim 12, **characterized in that** said control area includes an active surface (25, 44) on the display (22, 43) for detecting a touch of said pointing means (28).

**14.** An arrangement according to claim 12, **character-**

**ized in that** said control area includes a separate touch surface (53) for detecting a touch of the pointing means (28).

**15.** An arrangement according to claim 12, 13 or 14, **characterized in that** it further includes means (23, 45) to generate a sound which is proportional to a scrolling speed of the presented information (26).

**16.** An arrangement according to any previous claim 12 to 15, **characterized in that** it further includes means to arrange the presented information (26) in a form of a cylinder rotating in the display (22), whereby information (26) elements (27), such as text and symbols, are displayed on an outer surface of a cylinder.

**Patentansprüche**

**1.** Verfahren zum Rollen von Informationen (12, 13, 14), die auf einer Anzeige einer Mobilstation dargestellt werden, umfassend die Verfahrensschritte, bei denen ein Steuerbereich der Anzeige mit einem Zeigemittel (17) berührt wird, wobei das Zeigemittel (17) in einen Kontakt mit dem Steuerbereich der Anzeige bewegt wird, und ein angezeigter Teil der dargestellten Informationen (12, 13, 14) in der Anzeige (15) in Richtung einer Bewegung des Zeigemittels (17) gerollt (34) wird, wobei:

- der angezeigte Teil der Informationen (12, 13, 14), die auf der Anzeige der Mobilstation dargestellt werden, weitergerollt wird, wenn das Zeigemittel aus dem Steuerbereich der Anzeige entfernt wird, **dadurch gekennzeichnet, dass**
- das Rollen des angezeigten Teils der dargestellten Informationen (12, 13, 14) angehalten wird, indem der Anzeigesteuerbereich mit dem Zeigemittel (17) berührt wird.

**2.** Verfahren nach Anspruch 1, **dadurch gekennzeichnet, dass** der angezeigte Teil, der fortgesetzt rollt, so beschaffen ist, dass er mit einer Rate rollt, die für eine vertikale Geschwindigkeit des Zeigemittels (17) zum letzten Zeitpunkt vor dessen Entfernung gemessen wird.

**3.** Verfahren nach Anspruch 2, **dadurch gekennzeichnet, dass** der angezeigte Teil fortgesetzt rollt, wenn die Geschwindigkeit eine vorgegebene Grenze übersteigt.

**4.** Verfahren nach Anspruch 1, 2 oder 3, **dadurch gekennzeichnet, dass** der angezeigte Teil, der fortgesetzt rollt, so beschaffen ist, dass er mit einer Rate rollt, die von selbst verzögert wird.

**5.** Verfahren nach Anspruch 2, 3 oder 4, **dadurch gekennzeichnet, dass** das Rollen angehalten wird, falls die Rollrate unter eine vorgegebene Grenze abfällt.

**6.** Verfahren nach einem der vorhergehenden Ansprüche 1 bis 5, **dadurch gekennzeichnet, dass** eine Rollrate des angezeigten Teils der auf der Anzeige (15) dargestellten Informationen (12, 13, 14) durch Erzeugen eines zu der Rollrate proportionalen Tons angegeben wird.

**7.** Verfahren nach einem der vorhergehenden Ansprüche 1 bis 6, **dadurch gekennzeichnet, dass** die dargestellten Informationen (12, 13, 14) auf einer äußeren Oberfläche eines in der Anzeige (15) rotierenden imaginären Zylinders (11) angeordnet sind.

**8.** Verfahren nach einem der vorhergehenden Ansprüche 1 bis 7, **dadurch gekennzeichnet, dass** das Rollen des angezeigten Teils der dargestellten Informationen (12, 13, 14) oder eine Drehung des imaginären Zylinders (11) so beschaffen ist, dass sie im Wesentlichen kontinuierlich ist.

**9.** Verfahren nach Anspruch 7, **dadurch gekennzeichnet, dass** der Zylinder (11) auch seitlich beweglich ist.

**10.** Verfahren nach einem der vorhergehenden Ansprüche 1 bis 8, **dadurch gekennzeichnet, dass** das Rollen des angezeigten Teils auf eine Ausführung nur in einer vertikalen Richtung eingeschränkt ist.

**11.** Verfahren nach einem der vorhergehenden Ansprüche 1 bis 10, **dadurch gekennzeichnet, dass** die dargestellten Informationen (12, 13, 14) als eine Liste (12) angeordnet sind, deren Elemente (13, 14), etwa Text und Symbole, in der Anzeige (15) dargestellt werden.

**12.** Anordnung zum Rollen der auf einer Anzeige (22) eine Mobilstation (21) dargestellten Informationen (26), wobei die Anordnung eine Anzeige (22, 43) zum Anzeigen von Informationen (26), einen Anzeigesteuerbereich zum Erfassen einer Berührung eines Zeigemittels (28) sowie Mittel (41, 42, 46) zum Rollen eines angezeigten Teils der dargestellten Informationen (26) umfasst, wobei:

- die Mittel zum Rollen so beschaffen sind, dass sie den angezeigten Teil der auf der Anzeige (22) dargestellten Informationen (26) rollen lassen, wenn das Zeigemittel (28) aus dem Steuerbereich der Anzeige entfernt wird, **dadurch gekennzeichnet, dass**:

- die Rollmittel so beschaffen sind, dass sie das Rollen des angezeigten Teils der dargestellten Informationen (12, 13, 14) anhalten, wenn der Anzeigesteuerbereich mit dem Zeigemittel (17) berührt wird.

**13.** Anordnung nach Anspruch 12, **dadurch gekennzeichnet, dass** der Steuerbereich eine aktive Oberfläche (25, 44) auf der Anzeige (22, 43) umfasst, um eine Berührung des Zeigemittels (28) zu erfassen.

**14.** Anordnung nach Anspruch 12, **dadurch gekennzeichnet, dass** der Steuerbereich eine getrennte Berührungsoberfläche (53) umfasst, um eine Berührung des Zeigemittels (28) zu erfassen.

**15.** Anordnung nach Anspruch 12, 13 oder 14, **dadurch gekennzeichnet, dass** sie ferner Mittel (23, 45) enthält, um einen Ton zu erzeugen, der zu einer Rollgeschwindigkeit der dargestellten Informationen (26) proportional ist.

**16.** Anordnung nach einem der vorhergehenden Ansprüche 12 bis 15, **dadurch gekennzeichnet, dass** sie ferner Mittel umfasst, um die dargestellten Informationen (26) in Form eines in der Anzeige (22) sich drehenden Zylinders anzuordnen, wobei Elemente (27) der Informationen (26), etwa Text und Symbole, auf einer äußeren Oberfläche eines Zylinders angezeigt werden.

**Revendications**

**1.** Procédé pour faire défiler des informations (12, 13, 14) présentées sur un affichage d'une station mobile, comprenant les étapes du procédé dans lesquelles une zone de commande de l'affichage est touchée avec un moyen de pointage (17), ledit moyen de pointage (17) est déplacé er contact avec ladite zone de commande de l'affichage, et une partie affichée des informations présentées (12, 13, 14) est mise à défiler (34) dans l'affichage (15) dans une direction du déplacement dudit moyen de pointage (17), dans lequel :

- ladite partie affichée des informations (12, 13, 14) présentées sur l'affichage de la station mobile est laissée à défiler lorsque le moyen de pointage (17) est enlevé de ladite zone de commande dudit affichage, **caractérisée en ce que** :

- ladite partie affichée des informations présentées (12, 13, 14) est arrêtée de défiler en touchant ladite zone de commande d'affichage avec ledit moyen de pointage (17).

**2.** Procédé selon la revendication 1, **caractérisé en ce que** ladite partie affichée, qui est laissée à défiler, est conçue pour défiler à une vitesse mesurée pour une vitesse verticale dudit moyen de pointage (17) au dernier moment avant qu'il n'ait été enlevé.

**3.** Procédé selon la revendication 2, **caractérisé en ce que** ladite partie affichée est laissée à défiler si ladite vitesse dépasse une limite prédéterminée.

**4.** Procédé selon la revendication 1, 2 ou 3, **caractérisé en ce que** ladite partie affichée laissée à défiler est conçue pour défiler à une vitesse retardant par elle-même.

**5.** Procédé selon la revendication 2, 3 ou 4, **caractérisé en ce que** le défilement est arrêté si ladite vitesse de défilement descend en dessous d'une limite prédéterminée.

**6.** Procédé selon l'une quelconque des revendications précédentes 1 à 5, **caractérisé en ce qu'**une vitesse de défilement de ladite partie affichée des informations présentées (12, 13, 14) sur l'affichage (15) est indiquée en générant un son proportionnel à ladite vitesse de défilement.

**7.** Procédé selon l'une quelconque des revendications précédentes 1 à 6, **caractérisé en ce que** les informations présentées (12, 13, 14) sont disposées sur une surface externe d'un cylindre imaginaire (11) mis en rotation dans l'affichage (15).

**8.** Procédé selon l'une quelconque des revendications précédentes 1 à 7, **caractérisé en ce que** ledit défilement de ladite partie affichée des informations présentées (12, 13, 14), ou une rotation dudit cylindre imaginaire (11) est conçue pour être sensiblement continue.

**9.** Procédé selon la revendication 7, **caractérisé en ce que** le cylindre (11) peut également être déplacé latéralement.

**10.** Procédé selon l'une quelconque des revendications précédentes 1 à 8, **caractérisé en ce que** ledit défilement de ladite partie affichée est limité pour n'être effectué que dans une direction verticale.

**11.** Procédé selon l'une quelconque des revendications précédentes 1 à 10, **caractérisé en ce que** les informations présentées (12, 13, 14) sont agencées comme une liste (12), dont les éléments (13, 14) tels que texte et symboles, sont présentés dans l'affichage (15).

**12.** Agencement pour faire défiler les informations (26) présentés sur un affichage (22) d'une station mobile (21), l'agencement comprenant (22, 43) pour afficher les informations (26), une zone de commande de l'affichage pour détecter un toucher d'un moyen de pointage (28) et un moyen (41, 42, 46) pour faire défiler une partie affichée des informations présentées (26), dans lequel

- lesdits moyens pour le défilement sont conçus pour laisser ladite partie affichée des informations présentées (26) sur l'affichage (22) à défiler lorsque ledit moyen de pointage (28) est enlevé de ladite zone de commande de l'affichage, **caractérisé en ce que** :

- lesdits moyens pour le défilement sont conçus pour arrêter le défilement de ladite partie affichée des informations présentées (12, 13, 14) lorsque ladite zone de commande de l'affichage est touchée avec ledit moyen de pointage (17).

**13.** Agencement selon la revendication 12, **caractérisé en ce que** ladite zone de commande inclut une surface active (25, 44) sur l'affichage (22, 43) pour détecter un toucher dudit moyen de pointage (28).

**14.** Agencement selon la revendication 12, **caractérisé en ce que** ladite zone de commande inclut une surface tactile séparée (53) pour détecter un toucher du moyen de pointage (28).

**15.** Agencement selon la revendication 12, 13 ou 14, **caractérisé en ce qu'**il comprend, en outre, un moyen (23, 45) pour générer un son qui est proportionnel à une vitesse de défilement des informations présentées (26).

**16.** Agencement selon l'une quelconque des revendications précédentes 12 à 15, **caractérisé en ce qu'**il comprend, en outre, un moyen pour disposer les informations présentées (26) sous la forme d'un cylindre mis en rotation dans l'affichage (22), moyennant quoi les éléments (27) d'informations (26), tels que texte et symboles, sont affichés sur une surface externe d'un cylindre.

1. ELEMENT
2. ELEMENT
3. ELEMENT
4. ELEMENT
5. ELEMENT
6. ELEMENT
7. ELEMENT
8. ELEMENT
9. ELEMENT
10. ELEMENT

# FIGURE 1

FIRST TEXT
SECOND TEXT
THIRD TEXT
FOURTH TEXT
FIFTH TEXT
SIXTH TEXT
SEVENTH TEXT
EIGHTH TEXT
NINTH TEXT
TENTH TEXT

# FIGURE 2

9

31 — LIST PRESENTATION TO THE DISPLAY

BEGIN

32 — ELEMENT VISIBLE?

NO → LIST IS TOUCHED — 33

LIST IS SCROLLED — 34

YES

35 — LIST IS STOPPED

END

FIGURE 3

41 — CPU

42 — MEMORY

43 — DISPLAY

44 — INPUT SURFACE

46

45 — AUDIO SECTION

FIGURE 4

FIGURE 5